# EUROPEAN PATENT SPECIFICATION

(11) **EP 2 782 410 B1**
(45) Date of publication and mention of the grant of the patent: **01.06.2016**
(21) Application number: 12849211.3
(22) Date of filing: 12.11.2012
(51) Int. Cl.: H04W 74/04, G08C 15/00, H04M 11/00, H04W 4/04, G01D 4/00

(54) **RADIO COMMUNICATION SYSTEM, PARENT RADIO DEVICE, AND CHILD RADIO DEVICE**
FUNKKOMMUNIKATIONSSYSTEM, ÜBERGEORDNETE FUNKVORRICHTUNG UND UNTERGEORDNETE FUNKVORRICHTUNG
SYSTÈME DE COMMUNICATION RADIO, DISPOSITIF RADIO PARENT ET DISPOSITIF RADIO ENFANT

(30) Priority: 15.11.2011 JP 2011249271
(43) Date of publication of application: 24.09.2014
(73) Proprietor: Panasonic Corporation, Osaka 571-8501 (JP)
(72) Inventor: NARA, Hiroki, Osaka, 540-6207 (JP); NAKAMURA, Motoki, Osaka, 540-6207 (JP)
(74) Representative: Schwabe - Sandmair - Marx
(86) International application number: PCT/JP2012/007248
(87) International publication number: WO 2013/073158

(56) References cited:
- EP-A1- 1 401 159
- WO-A1-2005/027374
- WO-A1-2008/117915
- US-A1- 2008 049 700

## Description

### TECHNICAL FIELD

The present invention relates to radio communication systems using radio communication.

### BACKGROUND ART

To cope with recent environmental issues including global warming, energy-saving measures for reducing CO₂ emission have attracted attention in various fields. The energy-saving measures are directed to life infrastructures including gas, electric power, and water supply, which are essential for our life. Energy for use in such life infrastructures needs to be managed with efficient determination of energy consumption.

In Japan, for example, gas usage amounts are often measured with a manual method in which a service person visits households monthly to read the meter or with an automatic method in which gas meters with communication functions are used for automatic meter reading. On the other hand, in European countries, monthly meter reading, which is popular in Japan, is not employed, but people report gas usage amounts by themselves with postcard once a half year, for example. In the European countries, however, there is a movement of remotely determining gas consumption amounts in real time, e.g., monthly, daily, or hourly, from the viewpoint of energy management.

To achieve such remote meter reading or remote management systems, meters with communication functions are used, or as an alternative technique, a smart metering system obtained by attaching communication equipment to existing meters have become widespread. In this smart metering system, to implement a communication function wirelessly, for example, power consumption of a. battery for supplying power for communication is an important issue. This is because meters are an important life infrastructure, and thus, need to have a long battery life of 10-20 years without maintenance.

In addition, achievement of a high-performance remote management system not limited to a simple automatic meter reading function requires two-way radio communication. In such a remote management system, to drive a battery that can withstand a long-term operation, a communication protocol for radio communication is very important.

For example, one of communication protocols that achieve two-way communication is a piggybacking technique. This technique is used for performing two-way communication by transmitting data from a meter and performing data reception only immediately after the data transmission (see, for example, Patent Document 1).

Document WO2008117915 discloses a parent and a plurality of the child devices perform piggybacking type communication in the first predetermined time and performing retransmission of the data in a later time slot.

### CITATION LIST

### PATENT DOCUMENT

PATENT DOCUMENT 1: European Patent No. 1401159

### SUMMARY OF THE INVENTION

### TECHNICAL PROBLEM

In the piggybacking technique described in Patent Document 1, a server that controls the entire remote management system or a parent device that serves as a target of radio communication of a meter issues a response or an instruction to the meter only immediately after data transmission from the meter. Specifically, a child device receives data from the parent device only immediately after data transmission. Thus, in a case where communication with the child device is performed once a day, for example, a request or an instruction from the parent device is issued only once a day. Thus, the wait time before data transmission from the parent device is one day at the maximum, leading to poor real-time performance.

It is therefore an object of the present invention to provide a radio communication system including a parent radio device and a child radio device and achieving enhanced real-time performance and an interactive flexible configuration with a piggybacking technique.

### SOLUTION TO THE PROBLEM

In an aspect of the present invention, a radio communication system includes: a parent radio device; and a child radio device, wherein the parent radio device and the child radio device perform piggybacking-type communication in a first predetermined time, and perform broadcasting-type, multicasting-type, or unicasting-type communication in a second predetermined time different from the first predetermined time, and when the child radio device fails to recognize communication data in the first predetermined time, the parent radio device transmits a data communication request for requesting data communication with the parent radio device in a third predetermined time different from the first and second predetermined times, to the child radio device in the second predetermined time.

In this aspect, the parent radio device and the child radio device perform piggybacking-type communication in the first predetermined time, and perform, for example, broadcasting-type communication in the second predetermined time. Thus, the child radio device is capable of receiving an instruction from the parent radio device in the second predetermined time at times except the time immediately after data has been transmitted to the parent radio device in the first predetermined time. Accordingly, a wait time before data transmission from the parent radio device can be shortened, thereby enhancing real-time performance. In addition, the child radio device only needs to operate in a specified predetermined time. Thus, unnecessary wakeup operation is not needed, thereby reducing power consumption. In addition, if there is a child radio device that fails to recognize communication data in the first predetermined time, the parent radio device transmits a data communication request for requesting data communication in the third predetermined time, to this child radio device in the second predetermined time. This configuration ensures that data is transmitted again to the child radio device that failed to perform communication in the first predetermined time.

In another aspect of the present invention, a parent radio device in a radio communication system includes: a radio communication section configured to perform communication with a child radio device; a timer for use in setting a period in which communication is performed; and a controller configured to control operation of the radio communication section based on time data obtained by the timer, wherein the controller causes the radio communication section to operate in each of a first predetermined time and a second predetermined time different from the first predetermined time, the first and second predetermined times are defined based on the time data, and the controller controls operation of the radio communication section such that when the child radio device originates a call, the parent device individually transmits data to the child radio device to perform piggybacking-type communication in the first predetermined time, while broadcasting data to one or a plurality of child radio devices in the second predetermined time to perform a broadcasting-type, multicasting-type, or unicasting-type communication.

In still another aspect of the present invention, a child radio device in a radio communication system includes: a radio communication section configured to perform communication with a parent radio device; a timer for use in setting a period in which communication is performed; and a controller configured to control operation of the radio communication section based on time data obtained by the timer, wherein the controller causes the radio communication section to operate in each of a first predetermined time and a second predetermined time different from the first predetermined time, the first and second predetermined times are defined based on the time data, and the controller controls operation of the radio communication section such that the radio communication section originates a call in order to perform piggybacking-type communication with the parent radio device in the first predetermined time, and comes to be in a reception state in order to perform broadcasting-type, multicasting-type, or unicasting-type communication with the parent radio device in the second predetermined time.

### ADVANTAGES OF THE INVENTION

According to the present invention, a radio communication system basically employing a piggybacking technique and having a simple configuration can reduce a wait time before data transmission from a parent radio device and can enhance real-time performance. In addition, a child radio device does not need unnecessary wakeup operation, thereby reducing power consumption.

### BRIEF DESCRIPTION OF THE DRAWINGS

[FIG. 1] FIG. 1 illustrates a configuration of a radio system according to an embodiment.
[FIG. 2] FIG. 2 is a functional block diagram of a parent radio device of the embodiment.
[FIG. 3] FIG. 3 is a functional block diagram of a child radio device of the embodiment.
[FIG. 4] FIG. 4 shows a signal format of the parent radio device of the embodiment.
[FIG. 5] FIG. 5 shows a signal format of the child radio device of the embodiment.
[FIG. 6] FIG. 6 shows a communication flow in a first embodiment.
[FIG. 7] FIG. 7 shows a communication flow in a second embodiment.

### DESCRIPTION OF EMBODIMENTS

Embodiments of the present invention will be described with reference to the drawings. The invention is not limited to the following embodiments.

### (First Embodiment)

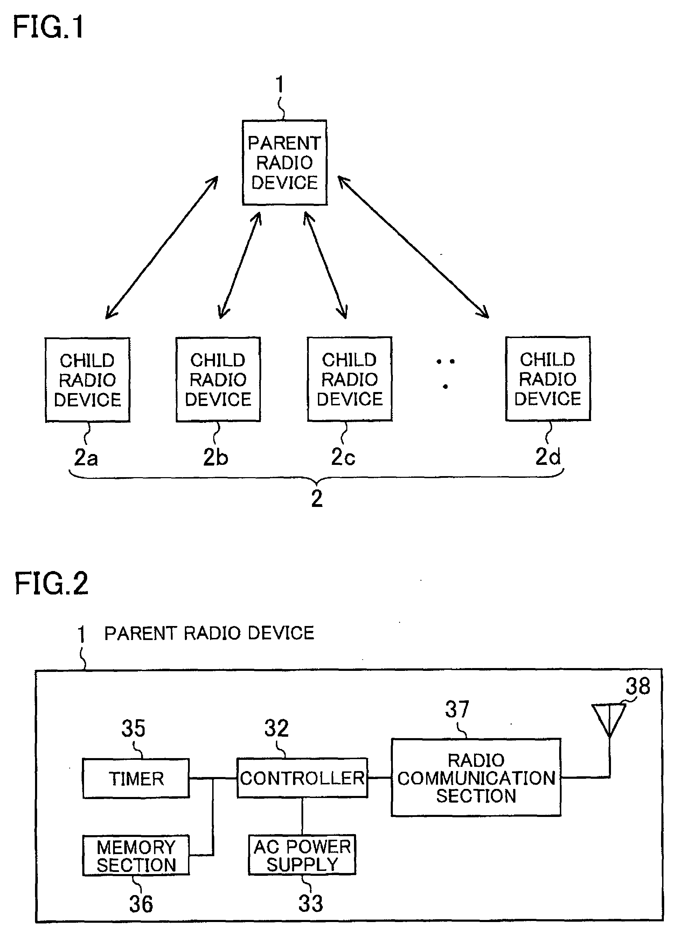

FIG. 1 schematically illustrates a radio communication system according to an embodiment. As illustrated in FIG. 1, a plurality of child radio devices 2 (2a-2d) perform radio communication with a parent radio device 1, i.e., a one-to-n configuration is employed in this embodiment.

FIG. 2 is a functional block diagram showing an example of an internal configuration of the parent radio device 1. As illustrated in FIG. 2, the parent radio device 1 includes: a radio communication section 37 that performs radio communication with the child radio devices 2; an antenna 38 for radio communication; a timer 35 for determining a communication timing; a memory section 36 that stores data from the child radio devices 2; a controller 32 that controls overall communication; and an AC power supply 33 that supplies power. The timer 35 is used for stetting a period in which communication is performed. The controller 32 controls operation of the radio communication section 37 based on time data obtained by the timer 35.

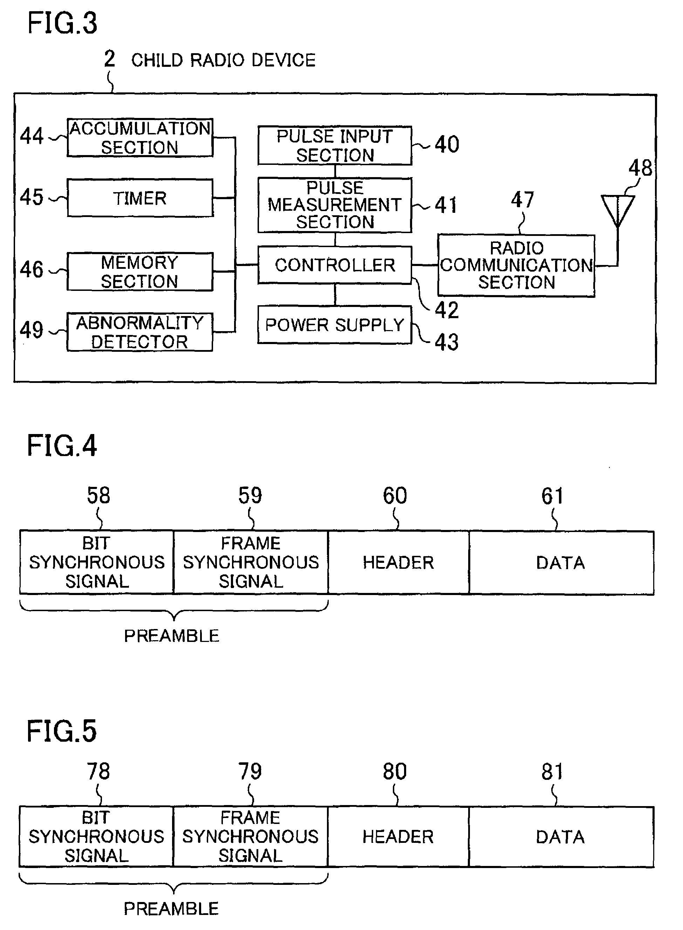

FIG. 3 is a functional block diagram showing an example of an internal configuration of one of the child radio devices 2. As illustrated in FIG. 3, each of the child radio devices 2 includes: a radio communication section 47 that performs radio communication with the parent radio device 1; an antenna 48 for radio communication; an accumulation section 44 that accumulates data; and a timer 45 for determining a communication timing. Each of the child radio devices 2 also includes: a pulse input section 40 that receives a pulse from a measurement target such as a gas flow meter; a pulse measurement section 41 that measures a pulse from the pulse input section 40; a memory section 46 that stores data from the pulse measurement section 41; an abnormality detector 49 that detects occurrence of abnormality in equipment; a controller 42 that controls overall communication; and a power supply 43 that supplies power. The timer 45 is used for setting a period in which communication is performed. The controller 42 controls operation of the radio communication section 47 based on time data obtained by the timer 45.

FIG. 4 shows an example of a signal format of the parent radio device 1. As illustrated in FIG. 4, a signal format transmitted from the parent radio device 1 to each of the child radio devices 2 is constituted by a bit synchronous signal 58, a frame synchronous signal 59, a header 60, and data 61. The header 60 includes a data type and a data attribute. Based on information of the header 60, the type of communication is determined from among a broadcasting-type (e.g., a case where a large unspecified number of child devices receive data and a case where all the child devices receive data), a multicasting-type (e.g., a case where a large specified number of child devices receive data and a case where a plurality of child devices are specified), or a unicasting-type (e.g., a case where a specific one of the child devices receives data). The data 61 includes one of time synchronization information for synchronizing watches, a request for meter-reading data, a request for a status, a request for an alarm, etc.

FIG. 5 shows an example of a signal format of the child radio devices 2. As illustrated in FIG. 5, a signal format transmitted from each of the child radio devices 2 to the parent radio device 1 is constituted by a bit synchronous signal 78, a frame synchronous signal 79, a header 80, and data 81. The header 80 includes a data type and a data attribute. Based on information of the header 80, it is determined what type of data is included in subsequent data 81. The data 81 includes a meter-reading value, a time stamp (time information on meter-reading), status information, etc. When an alarm occurs, information on the type of alarm information is incorporated.

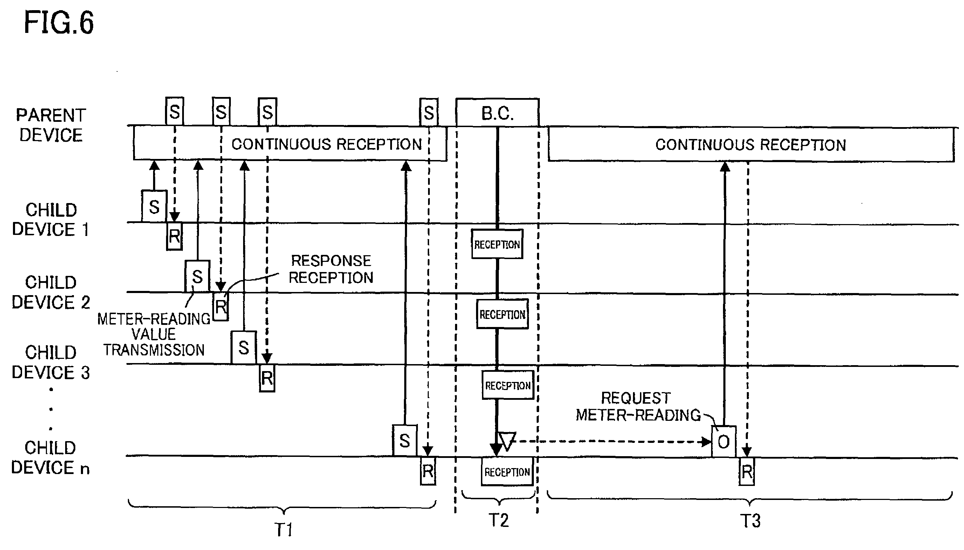

FIG. 6 shows an example of a communication flow between the parent radio device 1 and the child radio devices 2 of this embodiment. In FIG. 6, the parent radio device 1 is indicated by "parent device," and the child radio devices 2 are indicated by "child devices 1-n."

As shown in FIG. 6, in a first predetermined time T1, the parent radio device 1 and the child radio devices 2 perform piggybacking-type communication. The piggybacking-type communication herein refers to unicasting-type communication in which the parent device performs communication with a specific child radio device that has changed from a sleep state to a wakeup state. In this communication, the child radio device 1 originates a call for communication, and when the child radio device 2 originates a call, the parent radio device 1 individually transmits data to this child radio device 2. In the time T1, the parent radio device 1 individually performs piggybacking-type communication with the child radio devices 2. Then, as long as no significant problems occur, information such as a flow volume of a target can be sequentially received.

The sleep state herein refers to a state in which the child radio device 2 is in a power-saving state in order to minimize current consumption. In the sleep state, no power is supplied from the power supply 43 to the radio communication section 47. Thus, no radio communication is performed, and the controller 42 is also in a power-saving state. Then, when a predetermined signal is input from one of, for example, the pulse input section 40, the timer 45, or the abnormality detector 49 to the controller 42, the child radio device 2 changes from the sleep state to the wakeup state. If it is determined that no radio communication needs to be performed although the child radio device 2 is in the makeup state, the controller 42 performs control such that no power is supplied to the radio communication section 47 for power-saving. If the child radio device 2 is in the wakeup state and the controller 42 determines that radio communication is needed, power is supplied to the radio communication section 47, and radio communication is performed. That is, in the wakeup state, all the functions of the child radio device 2 become active. In this manner, even in a case where the power supply 43 is not an AC power supply but a battery or the like, a long-term operation of the system can be achieved.

In a second predetermined time T2 different from the time T1, the parent radio device 1 and the child radio devices 2 perform broadcasting-type communication. Specifically, the child radio devices 2 come to be in reception states, and the parent radio device 1 broadcasts data to a large unspecified number of child radio devices 2 that are all in wakeup states.

That is, the communication flow of FIG. 6 includes the time T1 in which basic operation of, for example, regular meter-reading (e.g., once a day) is performed and the time T2 in which the child radio devices 2 can receive a request or an instruction from the parent radio device 1 at times except the time immediately after data transmission. In the parent radio device 1, the controller 32 causes the radio communication section 37 to operate in the time T1 and the time T2 that are determined based on time data obtained by the timer 35. In each of the child radio devices 2, the controller 42 causes the radio communication section 47 to operate in the time T1 and the time T2 that are determined based on time data obtained by the timer 45.

If a problems occurs in regular meter-reading, e.g., if temporal degradation of a communication environment prevents one of the child radio devices (e.g., a child radio device 2d, which is shown as a child device n in FIG. 6) from recognizing communication data, the parent radio device 1 issues a data communication request for requesting data communication with the parent radio device 1 in a third predetermined time T3, to the child radio device 2d. that failed to receive communication data through broadcasting-type communication in the time T2. The third predetermined time T3 is different from the times T1 and T2.

The child radio device 2d (the child device n) that has received the data communication request through the broadcasting-type communication in the time T2, performs piggybacking-type communication in the time T3, thereby re-transmitting data that failed to be transmitted in the time T1.

In a conventional piggybacking-type system, once a failure occurs in one communication, transmission must be waited for the next timing (e.g., next day in communication that is performed once a day). On the other hand, in this embodiment, the communication flow described above enables the parent radio device 1 to issue, in the time T2, a communication request to the child radio device 2d that failed to perform communication.

In this manner, the period is divided into parts depending on communication states, and piggybacking-type communication and broadcasting-type communication are combined. Then, even in a system basically employing a piggybacking technique, an instruction from the parent radio device 1 can be transmitted to the child radio devices 2 at times except the time immediately after regular data transmission from the child radio devices 2, without a complicated configuration. In addition, a wait time before data transmission from the parent radio device 1 is reduced, and thus, a system exhibiting real-time performance can be obtained.

Furthermore, each of the child radio devices 2 only needs to operate in a specified predetermined time. Thus, unnecessary wakeup operation is not needed, thereby reducing power consumption. That is, each of the child radio devices 2 only needs to be in a wakeup state for regular meter-reading and transmit and receive data in the time T1, and to be in a wakeup state for acknowledging a message from the parent radio device 1 in the time T2. In periods except for the period of these wakeup states, the child radio devices 2 are basically in sleep states. Then, when the message acknowledged in the time T2 is related to one of the child radio devices 2, this child radio device 2 performs transmission and reception or a change of setting, for example, in accordance with the message, and promptly changes to a sleep state for power-saving. If the acknowledged message is not related to the child radio device 2 itself, this child radio device 2 immediately changes to a sleep state. In this manner, each of the child radio devices 2 only needs to be previously in a wakeup state in the time T2. Thus, it is unnecessary for the child radio devices 2 to become wakeup states frequently in order to confirm data transmission from the parent radio device 1, thereby reducing power consumption.

Moreover, since each of the child radio devices 2 previously changes to the wakeup state in the time T2, the period from when the child radio device 2 changes to the wakeup state to when the child radio device 2 starts power supply to the radio communication section 47 can be shortened. This configuration ensures data transmission without unnecessary power consumption. In this manner, a power-saving and reliable system can be achieved. This system is useful especially for the case of requiring a high radio output for long-distance communication driven with a battery.

In the example of this embodiment, re-transmission is requested in the time T2 by using broadcasting-type communication, to the child radio device 2 that failed to receive data in the time T1. However, application of broadcasting-type communication is not limited to this example, and broadcasting-type communication is useful for various applications including time synchronization and changes of setting.

In the example of this embodiment, broadcasting-type communication in which all the child radio devices 2 change to makeup states is performed in the time T2. Alternatively, depending on situations, multicasting-type communication in which specific ones of the child radio devices 2 change to wakeup states for communication or unicasting-type communication in which only one of the child radio devices 2 is specified, may be performed.

For example, the multicasting-type communication (i.e., communication with a large specific number of devices) is useful especially for the following cases. In general, in the case of regular meter-reading, meter-reading data is sent from the child radio devices 2 to the parent radio device 1 once a day. However, when an electromagnetic interference occurs, data of regular meter-reading might not be received by the parent radio device 1. In this case, if multiple ones of the child radio devices 2 fail to send data of regular meter-reading to the parent radio device 1, these child radio devices 2 are collectively specified, i.e., multicasting-type communication is performed, so that meter-reading data can be tried to acquire again. For example, in regular meter-reading, if the parent radio device 1 cannot acquire meter-reading data from child radio devices 2a-2c, the parent radio device 1 specifies the child radio devices 2a-2c and issues a request message for meter-reading data in the time T2. The child radio devices 2a-2c that have received the request message determine that this request message is issued to themselves, and transmit meter-reading data in the time T3 in accordance with this request. In this manner, multicasting-type communication is achieved. Thus, the parent radio device 1 can efficiently issue an instruction to the child radio devices 2 with one transmission of a request message.

In the case of unicasting-type communication (i.e., communication with a. specific device), one of the child radio devices 2 is also specified for communication. Thus, this unicasting-type communication can be employed in cases where special settings or a meter-reading request is needed only for, for example, the child radio device 2a. Specifically, in a manner similar to the multicasting-type communication, the parent radio device 1 specifies the child radio device 2a and issues a request message for, for example, meter-reading data or a change of setting to the child radio device 2a in the time T2. The child radio device 2a that has received the request message determines that this request message is issued to itself, and performs corresponding operation in the time T3 in accordance with the request message. The corresponding operation herein is, for example, transmission of meter-reading data or a change of setting. Even when the other child radio devices 2b-2d receive the request message issued to the child radio device 2a, these child radio devices 2b-2d do not perform operation like response as long as this request message is not issued to these child radio devices 2b-2d. The same holds true for multicasting-type communication.

The time T2 in which broadcasting-type communication, for example, is performed is not necessarily one, and a plurality of times T2 may be provided. For example, the child radio devices 2 may be set to be always ready for data reception on the hour. In such a case, the parent radio device 1 is set in the same way, and performs broadcasting-type communication with the child devices on the hour. In this manner, the parent radio device 1 is capable of issuing a request or an instruction to all the child radio devices 2 associated with this parent radio device 1. In addition, the above-described time setting, i.e., on the hour, may be changed to a. shorter time interval (e.g., on the half hour). Then, a flexible system with high real-time performance can be achieved.

### (Second Embodiment)

A second embodiment will be described only for aspects different from the first embodiment.

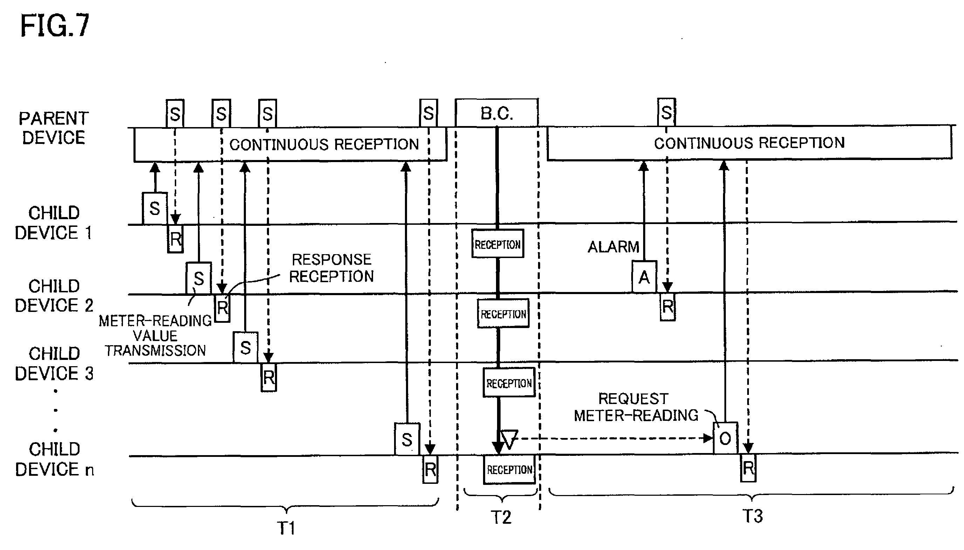

FIG. 7 shows an example of a communication flow between a parent radio device 1 and child radio devices 2 according to the second embodiment. The second embodiment differs from the first embodiment in that one of the child radio devices 2 issues a signal with urgency, i.e., an urgent signal, in a time T3. The urgent signal herein refers to an alarm signal issued when a gas flow volume as a target of meter-reading shows an abnormal value or when one of the child radio devices 2 is tampered, for example. The alarm signal is produced by a controller 42 based on information indicating abnormality detected by an abnormality detector 49, information input from a pulse input section 40, or information stored in a memory section 46.

When the urgent signal produced by the controller 42 is transmitted to the parent radio device 1 via a radio communication section 47, the parent radio device 1 that has received this urgent signal analyzes the content of the urgent signal in a controller 32, and promptly performs transmission (piggybacking-type communication) to the child radio device 2 that has issued this urgent signal.

In FIG. 7, an urgent signal is transmitted from the child radio device 2 in the time T3. In response to the urgent signal, the parent radio device 1 always performs piggybacking-type communication, irrespective of the time, e.g., a time T1, a time T2, and the time T3, in which the parent radio device 1 receives the urgent signal. That is, when child radio device 2 issues the urgent signal, the parent radio device 1 and the child radio device 2 performs piggybacking-type communication, irrespective of the time in which the urgent signal is issued. When the child radio device 2 transmits the urgent signal, the controller 42 of the child radio device 2 controls the radio communication section 47 such that the radio communication section 47 originates a call for piggybacking-type communication with the parent radio device 1, irrespective of the time in which the urgent signal is issued. In response to the urgent signal, the controller 32 of the parent radio device 1 controls the radio communication section 37 such that the parent radio device 1 performs piggybacking-type communication with the child radio device 2 that has issued the urgent signal, irrespective of the time in which the parent radio device 1 receives the urgent signal.

With the above-described configuration, emergency of the child radio devices 2 can be grasped in real time, and measures against the emergency can be taken quickly. Thus, reliability and safety can be appropriately obtained in a radio communication system.

In the above description, in each of the times T1, T2, and T3, piggybacking-type communication is performed. Suppose one of the child radio devices 2 issues an urgent signal in the time T1. Then, this child radio device 2 cannot transmit data, which is to be transmitted to the parent radio device 1 in a normal situation, in the time T1. Even in such a case, no problems occur because the parent radio device 1 can instruct re-transmission to the child radio device 2 through broadcasting-type communication in the time T2. In a case where one of the child radio devices 2 issues an urgent signal in the time T2 or T3, since transmission of, for example, meter-reading data to the parent radio device 1 has been completed in the time T1, no problems occur.

In this manner, even when an urgent signal is transmitted with priority in any case, since piggybacking-type communication and broadcasting-type communication are combined with separation of time periods, communication reliability and safety can be enhanced without impairing convenience.

### INDUSTRIAL APPLICABILITY

A radio communication system basically employing a piggybacking technique according to the present invention can enhance real-time performance and reduce power consumption. Thus, the radio communication system is useful for, for example, enhancing communication reliability and ensuring long lifetime of the system that remotely manages meters of utilities such as gas meters.

### DESCRIPTION OF REFERENCE CHARACTERS

- 1: parent radio device
- 2, 2a-2d: child radio device
- 32: controller
- 35: timer
- 37: radio communication section
- 42: controller
- 45: timer
- 47: radio communication section

## Claims

1. A radio communication system, comprising:
a parent radio device; and
a child radio device, wherein
the parent radio device and the child radio device perform piggybacking-type communication in a first predetermined time, and perform broadcasting-type, multicasting-type, or unicasting-type communication in a second predetermined time different from the first predetermined time, and
when the child radio device fails to recognize communication data in the first predetermined time, the parent radio device transmits a data communication request for requesting data communication with the parent radio device in a third predetermined time different the first and second predetermined times, to the child radio device in the second predetermined time.

2. The radio communication system of claim 1, wherein
in each of the first, second, and third predetermined times, when the child radio device issues an urgent signal, the parent radio device and the child radio device perform piggybacking-type communication.

3. A parent radio device in a radio communication system, the parent radio device comprising:
a radio communication section configured to perform communication with a child radio device;
a timer for use in setting a period in which communication is performed; and
a controller configured to control operation of the radio communication section based on time data obtained by the timer, wherein
the controller causes the radio communication section to operate in each of a first predetermined time and a second predetermined time different from the first predetermined time,
the first and second predetermined times are defined based on the time data, and
the controller controls operation of the radio communication section such that when the child radio device originates a call, the parent device individually transmits data to the child radio device to perform piggybacking-type communication in the first predetermined time, while broadcasting data to one or a plurality of child radio devices in the second predetermined time to perform a broadcasting-type, multicasting-type, or unicasting-type communication.

4. The parent radio device of claim 3, wherein
the controller controls the radio communication section such that, in each of the first and second predetermined times, when the parent radio device receives an urgent signal, the radio communication section performs piggybacking-type communication together with a child radio device that has issued the urgent signal.

5. The parent radio device of claim 3 or 4, wherein
the controller controls the radio communication section such that when the child radio device fails to recognize communication data in the first predetermined time, the radio communication section transmits a data communication request for requesting data communication with the parent radio device in a third predetermined time different from the first and second predetermined times, to the child radio device in the second predetermined time.

6. A child radio device in a radio communication system, the child radio device comprising:
a radio communication section configured to perform communication with a parent radio device;
a timer for use in setting a period in which communication is performed; and
a controller configured to control operation of the radio communication section based on time data obtained by the timer, wherein
the controller causes the radio communication section to operate in each of a first predetermined time and a second predetermined time different from the first predetermined time,
the first and second predetermined times are defined based on the time data, and
the controller controls operation of the radio communication section such that the radio communication section originates a call in order to perform piggybacking-type communication with the parent radio device in the first predetermined time, and comes to be in a reception state in order to perform broadcasting-type, multicasting-type, or unicasting-type communication with the parent radio device in the second predetermined time.

7. The child radio device of claim 6, wherein
the controller controls the radio communication section such that, in each of the first and second predetermined times, when the child radio device transmits an urgent signal, the radio communication section originates a call in order to perform piggybacking-type communication with the parent radio device.

8. The child radio device of claim 6 or 7, wherein
the controller controls the radio communication section such that when the child radio device receives a data communication request from the parent radio device in the second predetermined time, the radio communication section transmits data to the parent radio device in a third predetermined time different from the first and second predetermined times.

## Patentansprüche

1. Funkkommunikationssystem, das Folgendes umfasst:
ein übergeordnetes Funkgerät; und
ein untergeordnetes Funkgerät, wobei
das übergeordnete Funkgerät und das untergeordnete Funkgerät in einer ersten vorgegebenen Zeit eine Huckepack-Kommunikation durchführen und in einer zweiten vorgegebenen Zeit, die sich von der ersten vorgegebenen Zeit unterscheidet, eine Broadcast-, Multicast- oder Punkt-zu-Punkt-Kommunikation durchführen und dann,
wenn das untergeordnete Funkgerät die Kommunikationsdaten in der ersten vorgegebenen Zeit nicht erkennt, das übergeordnete Funkgerät in der zweiten vorgegebenen Zeit eine Datenkommunikationsanforderung an das untergeordnete Funkgerät überträgt, um eine Datenkommunikation mit dem übergeordneten Funkgerät in einer dritten vorgegebenen Zeit, die sich von der ersten und der zweiten vorgegebenen Zeit unterscheidet, anzufordern.

2. Funkkommunikationssystem nach Anspruch 1, wobei
jeweils in der ersten, zweiten oder dritten vorgegebenen Zeit, dann, wenn das untergeordnete Funkgerät ein dringendes Signal ausgibt, das übergeordnete Funkgerät und das untergeordnete Funkgerät eine Huckepack-Kommunikation durchführen.

3. Übergeordnetes Funkgerät in einem Funkkommunikationssystem, wobei das übergeordnete Funkgerät Folgendes umfasst:
einen Funkkommunikationsabschnitt, der konfiguriert ist, eine Kommunikation mit einem untergeordneten Funkgerät durchzuführen;
einen Zeitgeber, der zum Einstellen einer Zeitdauer, in der eine Kommunikation durchgeführt wird, verwendet wird; und
eine Steuerung, die konfiguriert ist, den Betrieb des Funkkommunikationsabschnitts basierend auf Zeitdaten, die von dem Zeitgeber erhalten werden, zu steuern, wobei
die Steuerung den Funkverbindungsabschnitt veranlasst, jeweils in einer ersten vorgegebenen Zeit und einer zweiten vorgegebenen Zeit, die sich von der ersten vorgegebenen Zeit unterscheidet, betrieben zu werden,
die erste und die zweite vorgegebene Zeit basierend auf den Zeitdaten definiert sind, und
die Steuerung den Betrieb des Funkkommunikationsabschnitts steuert, so dass dann, wenn das untergeordnete Funkgerät einen Anruf einleitet, das übergeordnete Gerät Daten einzeln an das untergeordnete Funkgerät überträgt, um in der ersten vorgegebenen Zeit eine Huckepack-Kommunikation durchzuführen, während es in der zweiten vorgegebenen Zeit Daten an eines oder mehrere untergeordnete Funkgeräte funkt, um eine Broadcast-, Multicast- oder Punkt-zu-Punkt-Kommunikation durchzuführen.

4. Übergeordnetes Funkgerät nach Anspruch 3, wobei
die Steuerung den Funkkommunikationsabschnitt steuert, so dass jeweils in der ersten und der zweiten vorgegebenen Zeit dann, wenn das übergeordnete Funkgerät ein dringendes Signal empfängt, der Funkkommunikationsabschnitt zusammen mit einem untergeordnetem Funkgerät, das das dringende Signal ausgegeben hat, eine Huckepack-Kommunikation durchführt.

5. Übergeordnetes Funkgerät nach Anspruch 3 oder 4, wobei
die Steuerung den Funkverbindungsabschnitt steuert, so dass dann, wenn das untergeordnete Funkgerät die Kommunikationsdaten in der ersten vorgegebenen Zeit nicht erkennt, der Funkkommunikationsabschnitt in der zweiten vorgegebenen Zeit eine Datenkommunikationsanforderung an das untergeordnete Funkgerät überträgt, um eine Datenkommunikation mit dem übergeordneten Funkgerät in einer dritten vorgegebenen Zeit, die sich von der ersten und der zweiten vorgegebenen Zeit unterscheidet, anzufordern.

6. Untergeordnetes Funkgerät in einem Funkkommunikationssystem, wobei das untergeordnete Funkgerät Folgendes umfasst:
einen Funkkommunikationsabschnitt, der konfiguriert ist, eine Kommunikation mit einem übergeordneten Funkgerät durchzuführen;
einen Zeitgeber, der zum Einstellen einer Zeitdauer, in der die Kommunikation durchgeführt wird, verwendet wird; und
eine Steuerung, die konfiguriert ist, den Betrieb des Funkkommunikationsabschnitts basierend auf Zeitdaten, die von dem Zeitgeber erhalten werden, zu steuern, wobei
die Steuerung den Funkverbindungsabschnitt veranlasst, jeweils in einer ersten vorgegebenen Zeit und einer zweiten vorgegebenen Zeit, die sich von der ersten vorgegebenen Zeit unterscheidet, betrieben zu werden,
die erste und die zweite vorgegebene Zeit basierend auf den Zeitdaten definiert sind und
die Steuerung den Betrieb des Funkkommunikationsabschnitts steuert, so dass der Funkkommunikationsabschnitt einen Anruf einleitet, um in der ersten vorgegebenen Zeit eine Huckepack-Kommunikation mit dem übergeordneten Funkgerät durchzuführen, und in einen Empfangszustand gelangt, um in der zweiten vorgegebenen Zeit eine Broadcast-, Multicast- oder Punkt-zu-Punkt-Kommunikation mit dem übergeordneten Funkgerät durchzuführen.

7. Untergeordnetes Funkgerät nach Anspruch 6, wobei
die Steuerung den Funkkommunikationsabschnitt steuert, so dass in der ersten und in der zweiten vorgegebenen Zeit jeweils dann, wenn das untergeordnete Funkgerät ein dringendes Signal überträgt, der Funkkommunikationsabschnitt einen Anruf einleitet, um eine Huckepack-Kommunikation mit dem übergeordneten Funkgerät durchzuführen.

8. Untergeordnetes Funkgerät nach Anspruch 6 oder 7, wobei
die Steuerung den Funkverbindungsabschnitt steuert, so dass dann, wenn das untergeordnete Funkgerät in der zweiten vorgegebenen Zeit eine Datenkommunikationsanforderung von dem übergeordnetem Funkgerät empfängt, der Funkkommunikationsabschnitt in einer dritten vorgegebenen Zeit, die sich von der ersten und der zweiten vorgegebenen Zeit unterscheidet, Daten an das übergeordnete Funkgerät sendet.

## Revendications

1. Système de communication radio, comportant :
un dispositif radio parent ; et
un dispositif radio enfant ; où
le dispositif radio parent et le dispositif radio enfant effectuent une communication de type superposée au cours d'une première période de temps prédéterminée, et exécutent une communication de type diffusion, de type multidiffusion ou de type monodiffusion au cours d'une deuxième période de temps prédéterminée différente de la première période de temps prédéterminée, et
lorsque le dispositif radio enfant ne parvient pas à reconnaître des données de communication au cours de la première période de temps prédéterminée, le dispositif radio parent transmet une demande de communication de données au dispositif radio enfant au cours de la seconde période de temps prédéterminée, afin de demander une communication de données au dispositif radio parent au cours d'une troisième période de temps prédéterminée différente de la première et de la seconde période de temps prédéterminée.

2. Système de communication radio selon la revendication 1, où
lorsque le dispositif radio enfant émet un signal urgent au cours de chacune des première, seconde et troisième périodes de temps prédéterminées, le dispositif radio parent et le dispositif radio enfant exécutent une communication de type superposée.

3. Dispositif radio parent dans un système de communication radio, le dispositif radio parent comportant :
une partie de communication radio conçue pour exécuter une communication avec un dispositif radio enfant ;
une minuterie servant à régler une période de temps dans laquelle la communication est exécutée ; et
une commande conçue pour commander un fonctionnement de la partie de communication radio sur la base de données de temps obtenues par la minuterie, où
la commande déclenche le fonctionnement de la partie de communication radio au cours d'une première période de temps prédéterminée et d'une seconde période de temps prédéterminée différente de la première période de temps prédéterminée,
la première et la seconde période de temps prédéterminée sont définies sur la base des données de temps, et
la commande commande le fonctionnement de la partie de communication radio de telle manière que lorsque le dispositif radio enfant émet un appel, le dispositif parent transmet individuellement des données au dispositif radio enfant afin d'exécuter une communication de type superposée au cours de la première période de temps prédéterminée, tout en diffusant des données à un ou plusieurs dispositifs radio enfant au cours de la seconde période de temps prédéterminée afin d'exécuter une communication de type diffusion, de type multidiffusion ou de type monodiffusion.

4. Dispositif radio parent selon la revendication 3, où
la commande commande la partie de communication radio de telle manière que lorsque le dispositif radio parent reçoit un signal urgent au cours de chacune des première et seconde période de temps prédéterminée, la partie de communication radio exécute une communication de type superposée conjointement avec le dispositif radio enfant ayant émis le signal urgent.

5. Dispositif radio parent selon la revendication 3 ou 4, où
la commande commande la partie de communication radio de telle manière que lorsque le dispositif radio enfant ne parvient pas à reconnaître des données de communication au cours de la première période de temps prédéterminée, la partie de communication radio transmet une demande de communication de données au dispositif radio enfant au cours de la seconde période de temps prédéterminée, afin de demander une communication de données au dispositif radio parent au cours d'une troisième période de temps prédéterminée différente de la première et de la seconde période de temps prédéterminée.

6. Dispositif radio enfant dans un système de communication radio, le dispositif radio enfant comportant :
une partie de communication radio conçue pour exécuter une communication avec un dispositif radio parent;
une minuterie servant à régler une période de temps dans laquelle la communication est exécutée ; et
une commande conçue pour commander un fonctionnement de la partie de communication radio sur la base de données de temps obtenues par la minuterie, où
la commande déclenche le fonctionnement de la partie de communication radio au cours d'une première période de temps prédéterminée et d'une seconde période de temps prédéterminée différente de la première période de temps prédéterminée,
la première et la seconde période de temps prédéterminée sont définies sur la base des données de temps, et
la commande commande le fonctionnement de la partie de communication radio de telle manière que la partie de communication radio émet un appel afin d'exécuter une communication de type superposée avec le dispositif radio parent au cours de la première période de temps prédéterminée, et passe dans un état de réception afin d'exécuter une communication de type diffusion, de type multidiffusion ou de type monodiffusion avec le dispositif radio parent au cours de la seconde période de temps prédéterminée.

7. Dispositif radio enfant selon la revendication 6, où
la commande commande la partie de communication radio de telle manière que lorsque le dispositif radio enfant transmet un signal urgent au cours de chacune des première et seconde période de temps prédéterminée, la partie de communication radio émet un appel afin d'exécuter une communication de type superposée conjointement avec le dispositif radio parent.

8. Dispositif radio enfant selon la revendication 6 ou 7, où
la commande commande la partie de communication radio de telle manière que lorsque le dispositif radio enfant reçoit une demande de communication de données en provenance du dispositif radio parent au cours de la seconde période de temps prédéterminée, la partie de communication radio transmet des données au dispositif radio parent au cours d'une troisième période de temps prédéterminée différente de la première et de la seconde période de temps prédéterminée.
